Europäisches Patentamt

European Patent Office

Office européen des brevets

(19)

(11) Publication number: **0 395 354**
**A1**

(12) **EUROPEAN PATENT APPLICATION**

(21) Application number: **90304390.9**

(51) Int. Cl.⁵: **B01J 2/14, A01N 25/12**

(22) Date of filing: **24.04.90**

(30) Priority: **24.04.89 US 342114**
**06.03.90 US 489383**

(43) Date of publication of application:
**31.10.90 Bulletin 90/44**

(84) Designated Contracting States:
**GR**

(71) Applicant: **E.I. DU PONT DE NEMOURS AND
COMPANY**
**1007 Market Street**
**Wilmington Delaware 19898(US)**

(72) Inventor: **Maroglou, Athanasios**
**4208 Pebble Beach Drive**
**League City, Texas 77573(US)**

(74) Representative: **Hildyard, Edward Martin et al
Frank B. Dehn & Co. European Patent
Attorneys Imperial House 15-19 Kingsway
London WC2B 6UZ(GB)**

(54) **Pan granulation.**

(57) A process and apparatus for pan granulating wherein steam is applied to the ingredients on the rotating pan surface to raise their temperature to 30-120° C.

EP 0 395 354 A1

# PAN GRANULATION

## BACKGROUND OF THE INVENTION

Pan granulating has been used extensively for granulating ores and raw meal for cement kilns. In this process, a pan granulator is used to mix a solid particle with a liquid, usually water, to form granules of a desired size. The apparatus used will be referred to herein as a pan granulator; it is also known in the art as an inclined dish granulator, a disc granulator, a granulating table, an inclined pan, or a coating pan.

One of the drawbacks of pan granulating is that the liquid applied during the granulation step must be removed in a drying step. In many operations the drying step is the slowest step in the process and is often the capacity-limiting feature.

German Patent Application DE 3,246,493 (published June 20, 1984) discloses a process for the production of water-dispersible or water-soluble granules by subjecting a powdered material, such as an agrochemical, to a rolling or rotating motion and spraying with water vapor having a temperature between $25^\circ$ C and $100^\circ$ C. However, this process uses very fine (less than 100 microns) droplets of steam, no water is added, and the temperature refers only to the steam itself and not the ingredients on the pan bed.

It is an object of the present invention to provide an improved process for pan granulating utilizing a minimal amount of water. It is a further object of the present invention to provide a pan granulating process using high temperature steam. These and other objects, features and advantages of the present invention will become readily understood upon having reference to the following description of the invention.

## SUMMARY OF THE INVENTION

It has been discovered that the process for pan granulating can be improved if sufficient saturated or superheated steam is applied to the ingredients on the surface of the rotating pan to raise their temperature to $30\text{-}120^\circ$ C, preferably $35\text{-}70^\circ$ C. The addition of this steam reduces the amount of liquid necessary for granulation, thereby requiring less drying time for the product granules. The process is particularly useful in granulating ingredients that normally require large amounts of moisture during granulation.

The improved process of the invention can be used to granulate many materials. It is particularly useful to granulate crop protection chemicals. When these materials are granulated with steam, the resultant granules display optimum properties such as rapid dispersion in various fluids (e.g., water) and attrition resistance.

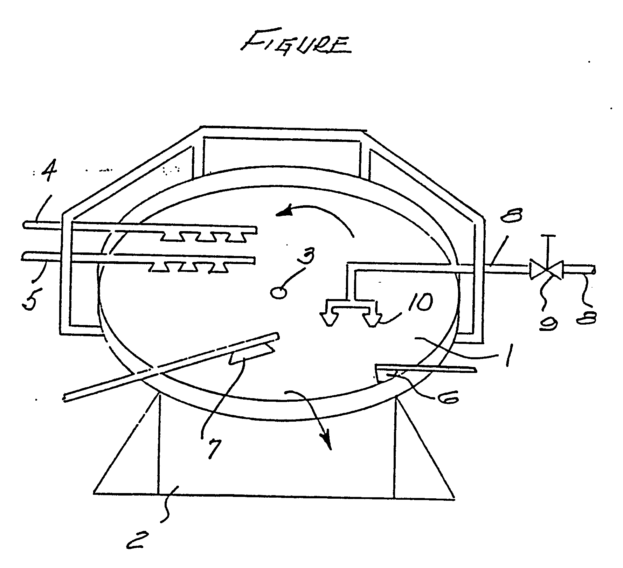

## DESCRIPTION OF THE FIGURE

The Figure is a view of a conventional pan granulator having means for applying steam to the ingredients on the surface of the pan.

## DESCRIPTION OF THE INVENTION

The invention relates to an improved process for pan granulation by the simultaneous application of heat and moisture, in the form of saturated or superheated steam, to the tumbling ingredients on the surface of the rotating pan.

An apparatus useful in the process of the invention will be described with reference to the Figure.

Any conventional pan granulator can be modified for use in the process of the invention. The Figure is a simplified drawing of a conventional model.

A shallow cylindrical pan 1 is attached to a base support 2 and rotated about an inclined axis. The rotation is accomplished by a drive means (not illustrated) which is operably connected to the pan 1 through the axle 3. The angle of inclination and the speed of rotation of the pan are usually variable and are adjusted as is conventional to produce the desired size granule. The ingredients that are granulated on the pan are a mixture of solids and liquid, usually water. The solids are supplied to the surface of the pan through a discharge means 4 and liquid is supplied by spray means 5. The solids can be either one material or a mixture, and often it is desirable to premill to a particle size between 2 and 30 microns. The solids can also be supplied partly by a recycle of over- or undersized granular product.

In operation it is desirable that the liquid be sprayed on a moving bed of the solid materials and absorbed and not sprayed on the surface of the pan. The spray droplet size is determined in the conventional manner, i.e. it is a function of the feed size and the desired granule size. The finer the spray, the smaller the granules.

The granulator can also contain a side wall scraper 6 and a bottom scraper 7 to prevent build up of the ingredients on the pan surfaces. The bottom scraper can be of the reciprocating type and also can serve to maintain a uniform deposit of material on the surface of the pan.

In the apparatus of the invention steam is saturated or superheated and applied to the ingredients on the pan. Thus steam is supplied through a conduit 8, through a metering valve 9, to a series of nozzles 10. The nozzles can be located anywhere on the pan surface that permits efficient contact with the tumbling ingredients. The location of the nozzle is chosen to make granules of the desired size.

In operation, solids, often premilled, are continuously fed through opening 4 into the pan and water is added by sprayer 5 in the conventional manner. Steam is also introduced into the rotating pan 1 by the nozzles 10. The rate of addition of saturated or superheated steam is adjusted by valve 9 to obtain a pan bed temperature of 30° to 120°C, preferably 35° to 70°C. The temperature of the steam itself which is applied to the pan is greater than or equal to 100°C, preferably between 100°C and 400°C. The maximum temperature of the mixture of ingredients is limited only by the stability or melting point of the solid particles. In operation the beneficial effect of the addition of steam is usually not observed at temperatures below 30°C. As the ingredients are mixed and treated with the steam, granules grow in size and the largest granules overflow from the bottom edge of the pan in the usual fashion.

The pan angle and rotation rate are selected using known relationships to provide the desired granule formation.

The amount of water added is determined based on the desired granule size. When steam is introduced and the pan temperature rises, the moisture requirement for the desired granule size is reduced by as much as 30 to 40%, and preferably at least 20%.

It should be understood that the apparatus of the Figure is hereby illustrative. In another useful embodiment (not illustrated) the pan is rotated clockwise with the steam nozzles located near where the granules overflow. As this pan rotates, after the steam addition, the water is added and then the premix of solid ingredients.

The advantages of the invention arise from the fact that less moisture is required in the granulation process; this results in substantially reduced drying time to remove water from the product granules. Thus the granulation process requires less drying capacity. There is also decreased decomposition during the granulation of materials that have limited stability in water, since the material is contacted with substantially less water than in the art process. Also useful is the large size and high quality of the product granules in comparison to those formed without raising the temperature of the mixture, since the product is less subject to attrition during handling, and the product appears more attractive due to large, uniform granules.

The term "crop protection chemical" is intended to refer to biologically active compositions containing chemicals which are effective in killing pests or preventing or controlling their growth. These chemicals are commonly known as herbicides, fungicides, insecticides, nematocides, acaricides, miticides, virucides, algicides, bactericides, plant growth regulants and their agriculturally suitable salts. These chemicals may be water-soluble or water-insoluble and may be solid or liquid at room temperature, providing the liquids are first adsorbed onto solid carriers before granulation. Examples of suitable crop protection chemicals are shown in, but not limited to, Table I.

## TABLE 1

HERBICIDES

Cmpd.

| No. | Common Name | m.p.(°C) | Chemical Name |
|---|---|---|---|
| 1 | acifluorfen | 142-160 | 5-[2-chloro-4-(trifluoro methyl)phenoxy]-2-nitro-benzoic acid |
| 2 | alachlor | 39-42 | 2-chloro-2',6'-diethyl-N-(methoxymethyl)-acetanilide |
| 3 | asulam | 142-144 | methyl [(4-aminophenyl)-sulfonyl]carbamate |
| 4 | atrazine | 175-177 | 6-chloro-N-ethyl-N'-(1-methylethyl)-1,3,5-triazine-2,4-diamine |
| 5 | bensulfuron methyl | 185-188 | 2-[[[[(4,6-dimethoxy-2-pyrimidinyl)amino]-carbonyl]amino]sulfonyl]-methyl]benzoic acid, methyl ester |
| 6 | bentazon | 137-139 | 3-(1-methylethyl)-(1H)-2,1,3-benzothiadiazin-4(3H)-one, 2,2-dioxide |
| 7 | bromacil | 158-159 | 5-bromo-6-methyl-3-(1-methylpropyl)-2,4(1H,3H)pyrimi-dinedione |

4

Cmpd.

| No. | Common Name | m.p.(°C) | Chemical Name |
|-----|-------------|----------|---------------|
| 8 | bromoxynil | 194-195 | 3,5-dibromo-4-hydroxybenzonitrile |
| 9 | chloramben | 200-201 | 3-amino-2,5-dichlorobenzoic acid |
| 10 | chlorimuron ethyl | >100 | 2-[[[[(4-chloro-6-methoxy-2-pyrimidinyl)amino]carbonyl]amino]sulfonyl]benzoic acid, ethyl ester |
| 11 | chloroxuron | 151-152 | N'-[4-(4-chlorophenoxy)-phenyl]N,N-dimethylurea |
| 12 | chlorsulfuron | 174-178 | 2-chloro-N-[[(4-methoxy-6-methyl-1,3,5-triazin-2-yl)-amino]carbonyl]benzene-sulfonamide |
| 13 | chlortoluron | 147-148 | N'-(3-chloro-4-methylphenyl)-N,N-dimethylurea |
| 14 | clomazone | | 2-[(2-chlorophenyl)methyl]-4,4-dimethyl-3-isoxazoli-dinone |
| 15 | cyanazine | 166-167 | 2-[[4-chloro-6-(ethylamino)-1,3,5-triazin-2-yl]amino]-2-methylpropanenitrile |

Cmpd.

| No. | Common Name | m.p.(°C) | Chemical Name |
|-----|-------------|----------|---------------|
| 16 | dazomet | 104-105 | tetrahydro-3,5-dimethyl-2H-1,3,5-thiadiazine-2-thione |
| 17 | desmediphan | 120 | ethyl [3-[[(phenylamino)-carbonyl]oxy]phenyl]-carbamate |
| 18 | dicamba | 114-116 | 3,6-dichloro-2-methoxybenzoic acid |
| 19 | dichlobenil | 139-145 | 2,6-dichlorobenzonitrile |
| 20 | dichlorprop | 117-118 | (±)-2-(2,4-dichlorophenoxy)-propanoic acid |
| 21 | diphenamid | 134-135 | N,N-dimethyl-α-phenylbenzene-acetamide |
| 22 | dipropetryn | 104-106 | 6-(ethylthio)-N,N'-bis(1-methylethyl)-1,3,5-triazine-2,4-diamine |
| 23 | diuron | 158-159 | N'-(3,4-dichlorophenyl)-N,N-dimethylurea |
| 24 | thiameturon | >100 | 3-[[[[(4-methoxy-6-methyl-1,3,5-triazin-2-yl)amino]-carbonyl]amino]sulfonyl]-2-thiophenecarboxylic acid, methyl ester |

| Cmpd. No. | Common Name | m.p.(°C) | Chemical Name |
|---|---|---|---|
| 25 | ---- | >100 | 2-[[[[N-(4-methoxy-6-methyl-1,3,5-triazine-2-yl)-N-methylamino]carbonyl]-amino]sulfonyl]benzoic acid, methyl ester |
| 26 | fenac | 156 | 2,3,6-trichlorobenzeneacetic acid |
| 27 | fenuron | 133-134 | N,N-dimethyl-N'-phenylurea |
| 28 | fluometuron | 163-164 | N,N-dimethyl-N'-[3-(trifluoro-methyl)phenyl]urea |
| 29 | fluridone | 151-154 | 1-methyl-3-phenyl-5-[3-(tri-fluoromethyl)phenyl]-4(1H)-pyridinone |
| 30 | fomesafen | 220-221 | 5-[2-chloro-4-(trifluoro-methyl)phenoxy]-N-(methyl-sulfonyl)-2-nitrobenzamide |
| 31 | glyphosate | 200 | N-(phosphonomethyl)glycine |
| 32 | hexazinone | 115-117 | 3-cyclohexyl-6-(dimethyl-amino)-1-methyl-1,3,5-triazine-2,4(1H,3H)-dione |

| Cmpd. No. | Common Name | m.p.(°C) | Chemical Name |
|---|---|---|---|
| 33 | imazamethabenz | >100 | 6-(4-isopropyl-4-methyl-5-oxo-2-imidazolin-2-yl)-m-toluic acid, methyl ester and 6-(4-isopropyl-4-methyl-5-oxo-2-imidazolin-2-yl)-p-toluic acid, methyl ester |
| 34 | imazaquin | 219-222 | 2-[4,5-dihydro-4-methyl-4-(1-methylethyl)-5-oxo-1H-imidazol-2-yl]-3-quinoline-carboxylic acid |
| 35 | imazethapyr | 172-175 | (±)-2-[4,5-dihydro-4-methyl-4-(1-methylethyl)-5-oxo-1H-imidazol-2-yl]-5-ethyl-3-pyridinecarboxylic acid |
| 36 | ioxynil | 209 | 4-hydroxy-3,5-diiodobenzo-nitrile |
| 37 | isoproturon | 155-156 | N-(4-isopropylphenyl)-N',N'-dimethylurea |
| 38 | isouron | 119-120 | N'-[5-(1,1-dimethylethyl)-3-isoxazolyl]-N,N-dimethylurea |
| 39 | isoxaben | 176-179 | N-[3-(1-ethyl-1-methylpropyl)-5-isoxazolyl]-2,6-dimethoxy-benzamide |

8

Cmpd.

| No. | Common Name | m.p.(°C) | Chemical Name |
|---|---|---|---|
| 40 | karbutilate | 176-178 | 3-[[(dimethylamino)carbonyl]-amino]phenyl-(1,1-dimethyl-ethyl)carbamate |
| 41 | lenacil | 316-317 | 3-cyclohexyl-6,7-dihydro-1H-cyclopentapyrimidine-2,4-(3H,5H)dione |
| 42 | linuron | 93-94 | 3-(3,4-dichlorophenyl)-1-methoxy-1-methylurea |
| 43 | MCPA | 100-115 | (4-chloro-2-methylphenoxy)-acetic acid |
| 44 | MCPB | 100 | 4-(4-chloro-2-methylphenoxy)-butanoic acid |
| 45 | mefluidide | 183-185 | N-[2,4-dimethyl-5-[[(tri-fluoromethyl)sulfonyl]-amino]phenyl]acetamide |
| 46 | methabenz-thiazuron | 119-120 | 1,3-dimethyl-3-(2-benzothia-zolyl)urea |
| 47 | methazole | 123-124 | 2-(3,4-dichlorophenyl)-4-methyl-1,2,4-oxadiazol-idine-3,5-dione |
| 48 | metolachlor | liquid | 2-chloro-6'-ethyl-N-(2-methoxy-1-methylethyl)-acet-o-toluidine |

9

EP 0 395 354 A1

Cmpd.

| No. | Common Name | m.p.(°C) | Chemical Name |
|---|---|---|---|
| 49 | metribuzin | 125-126 | 4-amino-6-(1,1-dimethylethyl)-3-(methylthio)-1,2,4-triazin-5(4H)-one |
| 50 | metsulfuron methyl | 163-166 | 2-[[[[(4-methoxy-6-methyl-1,3,5-triazin-2-yl)amino]carbonyl]amino]sulfonyl]-benzoic acid, methyl ester |
| 51 | monuron | 174-175 | N'-(4-chlorophenyl)-N,N-dimethylurea |
| 52 | naptalam | 185 | 2-[(1-naphthalenylamino)-carbonyl]benzoic acid |
| 53 | neburon | 102-103 | 1-butyl-3-(3,4-dichloro-phenyl)-1-methylurea |
| 54 | nitralin | 151-152 | 4-(methylsulfonyl)-2,6-dinitro-N,N-dipropyl-aniline |
| 55 | norflurazon | 174-180 | 4-chloro-5-(methylamino)-2-[3-(trifluoromethyl)phenyl]-3(2H)-pyridazinone |
| 56 | oryzalin | 141-142 | 4-(dipropylamino)-3,5-dinitro-benzenesulfonamide |
| 57 | perfluidone | 142-144 | 1,1,1-trifluoro-N-[2-methyl-4-(phenylsulfonyl)phenyl]-methanesulfonamide |

10

| Cmpd. No. | Common Name | m.p.(°C) | Chemical Name |
|-----------|-------------|----------|---------------|
| 58 | phenmedipham | 143-144 | 3-[(methoxycarbonyl)amino]-phenyl (3-methylphenyl)-carbamate |
| 59 | picloram | >215 (DEC) | 4-amino-3,5,6-trichloro-2-pyridinecarboxylic acid |
| 60 | prometryn | 118-120 | N,N'-bis(1-methylethyl)-6-(methylthio)-1,3,5-triazine-2,4-diamine |
| 61 | pronamide | 155-156 | 3,5-dichloro-N-(1,1-dimethyl-2-propynyl)benzamide |
| 62 | propazine | 212-214 | 6-chloro-N,N'-bis(1-methyl-ethyl)-1,3,5-triazine-2,4-diamine |
| 63 | pyrazon | 205-206 | 5-amino-4-chloro-2-phenyl-3(2H)pyridazinone |
| 64 | siduron | 133-138 | N-(2-methylcyclohexyl)-N'-phenylurea |
| 65 | simazine | 225-227 | 6-chloro-N,N'-diethyl-1,3,5-triazine-2,4-diamine |
| 66 | sulfometuron methyl | 182-189 | 2-[[[[(4,6-dimethyl-2-pyrimidinyl)amino]carbonyl]-amino]sulfonyl]benzoic acid, methyl ester |

Cmpd.

| No. | Common Name | m.p.(°C) | Chemical Name |
|-----|-------------|----------|---------------|
| 67 | tebuthiuron | 161-164 | N-[5-(1,1-dimethylethyl)-1,3,4-thiadiazol-2-yl]-N,N'-dimethylurea |
| 68 | terbacil | 175-177 | 5-chloro-3-(1,1-dimethyl-ethyl)-6-methyl-2,4(1H,3H)-pyrimidinedione |
| 69 | terbuthyl-azine | 177-179 | 2-(tert-butylamino)-4-chloro-6-(ethyl-amino)-s-triazine |
| 70 | terbutryn | 104-105 | N-(1,1-dimethylethyl)-N'-ethyl-6-(methylthio)-1,3,5-triazine-2,4-diamine |
| 71 | triclopyr | 148-150 | [(3,5,6-trichloro-2-pyri-dinyl)oxy]acetic acid |
| 72 | trifluralin | 48-49 | α,α,α-trifluoro-2,6-dinitro-N,N-dipropyl-p-toluidine |
| 73 | 2,4-D | 140 | (2,4-dichlorophenoxy)acetic acid |
| 74 | 2,4-DB | 119-120 | 4-(2,4-dichlorophenoxy)-butanoic acid |
| 75 | triasulfuron | >100 | (3-(6-methoxy-4-methyl-1,3,5-triazin-2-yl)-1-[2-(2-chloroethoxy)phenylsulfonyl]urea |

12

| Cmpd. No. | Common Name | m.p.(°C) | Chemical Name |
|---|---|---|---|
| 76 | primisulfuron | >100 | [2-/3-(4,6-bis(difluoro-methoxypyrimidin-2-yl-ureidosulfonyl)benzoic acid methylester] |
| 77 | ---- | >100 | [2-/3-(4,6-bis(difluoro-methoxy)-pyrimidin-2-yl)-ureidosulfonyl)-benzoic acid methylester] |
| 78 | NC-311 | 170-172 | [5-pyrazolesulfonamide, N-[(4-methoxy-6-methyl-pyrimidine-2-yl)-amino-carbonyl]-4-methoxy-carbonyl-1-methyl-] |
| 79 | ---- | 160-162 | N-[[(4,6-dimethoxy-2-pyrimidinyl)amino]carbonyl]-3-(ethylsulfonyl)-2-pyridinesulfonamide |
| 80 | ---- | 152-159 | 2-[[[[(4,6-dimethoxy-2-pyrimidinyl)amino]carbonyl]-amino]sulfonyl]-N,N-dimethyl-3-pyridine-carboxamide |
| 81 | ---- | 204-206 | Methyl 2-[[[[[4-ethoxy-6-(methylamino)-1,3,5-triazin-2-yl]amino]carbonyl]amino]-sulfonyl]benzoate |

Cmpd.

| No. | Common Name | m.p.(°C) | Chemical Name |
|---|---|---|---|
| | **FUNGICIDES** | | |
| 82 | carbendazim | 302-307 | methyl 2-benzimidazole-carbamate |
| 83 | thiuram | 146 | tetramethylthiuram disulfide |
| 84 | dodine | 136 | n-dodecylguanidine acetate |
| 85 | chloroneb | 133-135 | 1,4-dichloro-2,5-dimethoxy-benzene |
| 86 | cymoxanil | 160-161 | 2-cyano-N-ethylcarbamoyl-2-methoxyiminoacetamide |
| 87 | captan | 178 | N-trichloromethylthiotetra-hydrophthalamide |
| 88 | folpet | 177 | N-trichloromethylthio-phthalimide |
| 89 | thiophanate-methyl | 195 | dimethyl 4,4'-(o-phenylene)-bis(3-thioallophanate) |
| 90 | thiabendazole | 304-305 | 2-(thiazol-4-yl)benzimida-zole |
| 91 | chlorothalonil | 240-241 | tetrachloroisophthalo-nitrile |

14

Cmpd.

| No. | Common Name | m.p.(°C) | Chemical Name |
|-----|-------------|----------|---------------|
| 92 | dichloran | 195 | 2,6-dichloro-4-nitroaniline |
| 93 | captafol | 160-161 | cis-N-[1,1,2,2-tetrachloro-ethyl)thio]cyclohex-4-ene-1,2- dicarbioximide |
| 94 | iprodione | 133-136 | 3-(3,5-dichlorophenyl)-N-(1-methylethyl)-2,4-dioxo-1-imidazolidine carboxamide |
| 95 | vinclozolin | 108 | 3-(3,5-dichlorophenyl)-5-ethenyl-5-methyl-2,4-oxazolidinedione |
| 96 | kasugamycin | 202-204 (DEC) | kasugamycin |
| 97 | triadimenol | 121-127 | beta-(4-chlorophenoxy)-α-(1,1-dimethylethyl)-1-H-1,2,4-triazol-1-ethanol |
| 98 | flutriafol | 130 | +-α-(2-fluorophenyl-α-(4-fluorophenyl)-1H-1,2,4-triazole-1-ethanol |
| 99 | flusilazol | 52-53 HCl 201-203 | 1-[[bis(4-fluorophenyl)-methylsilyl)methyl]-1H-1,2,4-triazole |

15

Cmpd.

| No. | Common Name | m.p.(°C) | Chemical Name |
|---|---|---|---|
| 100 | hexaconazole | 111 | (+/-)-α-butyl-α-(2,4-di chlorophenyl)-1H-1,2,4-triazole-1-ethanol |
| 101 | fenarimol | 117-119 | α-(2-chlorophenyl)-α(4-chlorophenyl)-5-pyri-dinemethanol |

## BACTERICIDES

| No. | Common Name | m.p.(°C) | Chemical Name |
|---|---|---|---|
| 102 | oxytetracycline dihydrate | 181-182 (DEC) | oxytetracycline dihydrate |

## ACARICIDES

| No. | Common Name | m.p.(°C) | Chemical Name |
|---|---|---|---|
| 103 | hexathiazox | 108-109 | trans-5-(4-chlorophenyl)-N-cyclohexyl-4-methyl-2-oxo-3-thiazolidinecarboxamide |
| 104 | oxythioquinox | 169-170 | 6-methyl-1,3-dithiolo-[2,3-B]quinonolin-2-one |
| 105 | dienochlor | 122-123 | bis(pentachloro-2,4-cyclo-pentadien-1-yl) |
| 106 | cyhexatin | 245 | tricyclohexyltin hydroxide |

16

Cmpd.

| No. | Common Name | m.p.(°C) | Chemical Name |
|---|---|---|---|

### INSECTICIDES

| No. | Common Name | m.p.(°C) | Chemical Name |
|---|---|---|---|
| 107 | carbofuran | 150-152 | methylcarbamic acid, ester with 2,3-dihydro-2,2-dimethyl-7-benzofuranol |
| 108 | carbaryl | 142 | methylcarbamic acid, ester with a-naphthol |
| 109 | thiodicarb | 173-174 | dimethyl N,N'-[thiobis-(N-methylimmo)carbonyloxy]]-bis[ethanimido-thioate] |
| 110 | deltamethrin | 98-101 | α-cyano-3-phenoxybenzyl-cis-3-(2,2-dibromovinyl)-2,2-dimethylcyclopropane carboxylate |
| 111 | methomyl | 78-79 | S-methyl N-(methylcarbamoyloxy)thioacetimidate |

The following Examples are offered to further illustrate various embodiments of the invention and are not intended to be limiting in any way.

### EXAMPLE 1

A conventional pan granulator (Mars Mineral DP14), after being modified for steam addition, was employed to produce herbicide granules.

| | |
|---|---|
| Diameter of pan | 35.6 cm |
| Angle of pan | 55° |
| Speed of rotation of pan | 39 rpm |
| Height of pan wall | 6.4 cm |

To the apparatus was added a premilled premix of solid ingredients of the following weight composition:
84% 5-bromo-6-methyl-3-(1-methylpropyl)-2,4(1H, 3H)pyrimidinedione
5% dispersant
2% wetting agent
6% binder
3% diluent, at the rate of 140 g/min.

Water was first added to the pan at a rate such that the moisture content was 15% by weight. Thereafter the water feed was reduced to produce a moisture content of 11% by weight and sufficient steam added to raise the temperature of the ingredients in the pan to 32° C. The addition of the steam reduced the drying time from about 10 minutes to 7 minutes and the observed quality of the granular product was good. The granule size ranged from about 500 to 3000 microns.

## EXAMPLE 2

A conventional pan granulator (Teledyne Corp.), after being modified for steam addition to the pan, was employed to produce herbicide granules.

| Diameter of pan | 91.4 cm |
|---|---|
| Angle of pan | 55° |
| Height of pan wall | 16.5 cm |
| Speed of pan rotation | 22-28 rpm |

To the granulator was added a premilled premix of solid ingredient of the following composition (by weight percent):
92.8% 2-[[4-chloro-6-(ethylamino)-1,3,5-triazin-2-yl]amino]-2-methylpropane-nitrile
5.7% dispersant
1% wetting agent
0.5% antifoam, at the rate of 136 Kg/hour.

In operation, the moisture requirement for pan granulation was reduced from 18-20% with water to 11-13% when steam was added at a rate to produce a material temperature in the pan of 65-75° C. The drying time was reduced from about 8 minutes to 6 minutes by the use of steam. The granule size ranged from about 300 to 3000 microns and the granules were uniformly spherical in shape.

## EXAMPLE 3

The granulator of Example 2 was used to granulate the following premix at the rate of 136 Kg/hour:
69.6% 2-[[4-chloro-6-(ethylamino)-1,3,5-triazin-2-yl]amino]-2-methylpropanenitrile
23.2% 6-chloro-N-ethyl-N'-(1-methylethyl)-1,3,5-triazine-2,4 diamine
5.7% dispersant
1% wetting agent
0.5% antifoam

The moisture requirement for pan granulation was reduced from 18-20% with water to 11-14% when steam was used to increase the material temperature in the pan to 65-70° C. The drying time was reduced from about 8 minutes to 6 minutes. The granules ranged in size from about 300 to 3000 microns and the granules were uniformly spherical in shape.

## Claims

1. An improved process for pan granulating comprising the application of sufficient saturated or superheated steam to the ingredients on the rotating pan surface to raise their temperature to 30-120° C.

2. The process of Claim 1 wherein the temperature is 35-70° C.

3. The process of Claim 1 wherein at least one of the ingredients is a solid crop protection chemical.

4. The process of Claim 3 wherein the solid crop protection chemical is selected from the group consisting of herbicides, fungicides, insecticides, nematocides, acaricides, miticides, virucides, algicides, bactericides, plant growth regulants and their agriculturally suitable salts.

5. The process of Claim 3 wherein the solid crop protection chemical is 5-bromo-6-methyl-3-(1-methylpropyl)-2,4(1H,3H)pyrimidinedione.

6. The process of Claim 3 wherein the solid crop protection chemical is 2-[[4-chloro-6-(ethylamino)-1,3,5-triazin-2-yl]amino]-2-methylpropanenitrile.

7. The process of Claim 3 wherein the solid crop protection chemical is 6-chloro-N-ethyl-N$^1$-(1-methylethyl)-1,3,5-triazine-2,4-diamine.

8. The process of Claim 1 wherein the ingredients include solids which have been premilled to a particle size of 2-30 microns.

9. The process of Claim 1 wherein the steam is introduced at a temperature of at least 100°C.

10. The process of Claim 9 wherein the steam is introduced at a temperature of 100-400°C.

11. An improved process for pan granulating comprising the application of sufficient saturated or superheated steam to the ingredients on the rotating pan surface to reduce the amount of liquid necessary for granulation by at least 20%.

12. An improved process for pan granulating comprising the application of sufficient saturated or superheated steam to the ingredients on the rotating pan surface to raise their temperature to 30-120°C, the ingredients comprising solids and liquids, the liquid being applied by spray means thereto.

13. The process of Claim 12 wherein the liquid is water.

FIGURE

European Patent Office

Application Number

EP 90 30 4390

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A- 794 030 (FISONS LTD) * Whole document * | 1,9,10, 11,12, 13 | B 01 J 2/14 A 01 N 25/12 |
| | --- | | |
| Y | US-A-3 110 572 (R.L. VON REPPERT) * Whole document * | 1,9,10, 11,12, 13 | |
| | --- | | |
| A | DE-B-1 252 211 (DEUTSCHE HYPERPHOSPHAT GESELLSCHAFT mbH) | | |
| | --- | | |
| A | GB-A- 796 861 (CHEMISCHE WERKE ALBERT) | | |
| | ----- | | |

| | | TECHNICAL FIELDS SEARCHED (Int. Cl.5) |
|---|---|---|
| | | B 01 J A 01 N |

The present search report has been drawn up for all claims

| Place of search | Date of completion of the search | Examiner |
|---|---|---|
| THE HAGUE | 31-05-1990 | PYFFEROEN K. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P0401)